# EUROPÄISCHE PATENTSCHRIFT

(11) **EP 3 763 481 B1**
(45) Veröffentlichungstag und Bekanntmachung des Hinweises auf die Patenterteilung: **28.12.2022**
(21) Anmeldenummer: 20185295.1
(22) Anmeldetag: 10.07.2020
(51) Int. Cl.: B24C 1/00, B24C 7/00, B24C 5/04, B24C 5/02

(54) **VERFAHREN UND VORRICHTUNG ZUM ERZEUGEN EINES CO2-SCHNEE-STRAHLS**
METHOD AND APPARATUS FOR CREATING A CO2 SNOW JET
PROCÉDÉ ET APPAREIL DE GÉNÉRATION D'UN JET DE NEIGE CARBONIQUE

(30) Priorität: 10.07.2019 DE 102019118717
(43) Veröffentlichungstag der Anmeldung: 13.01.2021
(73) Patentinhaber: ACP Systems AG, 78658 Zimmern ob Rottweil (DE)
(72) Erfinder: Jäger, Felix, 78333 Stockach (DE); Haas, Andreas, 78112 St. Georgen (DE)
(74) Vertreter: DREISS Patentanwälte PartG mbB

(56) Entgegenhaltungen:
- EP-A1- 1 183 133
- WO-A1-03/095146
- DE-A1-102011 004 724
- JP-A- 2001 277 116
- JP-A- 2009 195 762
- US-A- 5 733 174
- US-A1- 2013 334 343
- US-B2- 7 293 570

## Beschreibung

Die Erfindung betrifft ein Verfahren zum Erzeugen eines CO2-Schnee-Strahls gemäß dem Oberbegriff des Anspruchs 1.

Ferner betrifft die Erfindung eine Vorrichtung zur Durchführung des Verfahrens. Ein Verfahren nach dem Oberbegriff des Anspruchs 1 und eine Vorrichtung nach dem Oberbegriff des Anspruchs 8 ist bekannt aus 2001 277116 Verfahren zum Erzeugen eines CO2-Schnee-Strahls sind bereits bekannt. Zum Erzeugen eines CO2-Schnee-Strahls wird zunächst flüssiges CO2 (Kohlendioxid) bei einem Ausgangsdruck von in etwa 5 bis 70 bar über eine Eintrittsöffnung einem Expansionskanal, bspw. einer Kapillare, zugeführt. Über eine Länge des Expansionskanals fällt der Druck vom Ausgangsdruck an der Eintrittsöffnung bis auf Umgebungsdruck (üblicherweise 1 bar) an einer Austrittsöffnung des Expansionskanals ab. Mit fallendem Druck findet eine schrittweise Phasenumwandlung von flüssigem CO2 in gasförmiges CO2 bei gleichzeitiger Abkühlung des Gemisches statt. Bei Unterschreitung des Drucks am Tripelpunkt von CO2 (5,185 bar) wandelt sich die verbleibende flüssige Phase zumindest teilweise in festes CO2 in Form von Schneekristallen, sog. CO2-Schnee, um. Bei CO2-"Schnee" handelt es sich also um CO2 in einem festen Aggregatzustand und insbesondere nicht um "Schnee" im Sinne von gefrorenem Wasser. Die entstehenden CO2-Schneekristalle werden durch das in Folge der Entspannung beschleunigte CO2-Gas mitgerissen, beschleunigt und gemeinsam mit dem CO2-Gas als CO2-Gas/CO2-Schnee Gemisch aus der Austrittsöffnung ausgegeben.

Das aus der Austrittsöffnung des Expansionskanals ausgegebene CO2-Gas/CO2-Schnee Gemisch wird dann von einem Mantelstrahl aus einem Trägergas in einer Umfangsrichtung umgeben, gebündelt und in einer Strahlrichtung zu einem CO2-Schnee-Strahl, vorzugsweise auf Überschall, beschleunigt. Zum Erzeugen des Mantelstrahls wird ein Trägergas in eine den Expansionskanal, vorzugsweise konzentrisch, umgebende Mantelstrahldüse zugeführt.

Ein solcher CO2-Schnee-Strahl wird insbesondere zur schonenden Reinigung von Oberflächen, bspw. von Werkstückoberflächen, verwendet (sog. "CO2-Schneestrahlen"). Insbesondere ermöglicht CO2-Schneestrahlen eine trockene (wasserfreie), lösemittelfreie und rückstandsfreie Entfernung filmischer und/oder partikulärer Verunreinigungen (bspw. Staub, Ablationsrückstände, Reste von Schneidemulsionen, Fingerabdrücke, etc.).

Die Reinigungswirkung eines CO2-Schnee-Strahls beim Auftreffen auf eine Oberfläche beruht im Wesentlichen auf vier Wirkmechanismen: 1. Abrasion durch Impulsübertrag (beschleunigte CO2-Schneekristalle übertragen Druck- und Scherkräfte beim Auftreffen auf die Oberfläche); 2. Verspröden von Verunreinigungen durch schnelles Abkühlen (Sublimationspunkt von CO2-Schnee bei Atmosphärendruck: - 78,5 °C); 3. Chemische Lösung von Verunreinigungen, bspw. von Adsorptionsverbindungen (im Zuge des Aufpralls von CO2-Schneekristallen auf eine Oberfläche kann CO2 in einen überkritischen Zustand überführt werden; in diesem Zustand ist CO2 ein gutes chemisches Lösemittel); 4. Wegschleudern von Verunreinigungen durch (ca. 500-fache) Volumenzunahme bei der Sublimation von CO2 aus der festen Phase in die Gasphase.

CO2-Schneestrahlen ist von dem regelmäßig stärker abrasiv wirkenden CO2-Trockeneisstrahlen zu unterscheiden, bei dem Trockeneispellets (Pellets aus festem CO2, also insbesondere keine CO2-Schneekristalle) in einer Strahlanlage beschleunigt und auf ein zu reinigendes Werkstück gestrahlt werden. Während Trockeneispellets üblicherweise in einem separat von der Strahlanlage bereitgestellten Pelletierer hergestellt werden und dann batchweise der Strahlanlage zugeführt werden, ermöglicht CO2-Schneestrahlen einen kontinuierlichen Betrieb und eignet sich daher insbesondere zur Automatisierung.

Aufgabe der vorliegenden Erfindung ist es, die Reinigungswirkung beim CO2-Schneestrahlen zu erhöhen. Gleichzeitig ist eine wirtschaftliche Betriebsweise wünschenswert.

Diese Aufgabe wird erfindungsgemäß durch ein Verfahren mit den Merkmalen des Anspruchs 1 gelöst.

Erfindungsgemäß wird also vorgeschlagen, flüssiges CO2 für eine ausgewählte Öffnungsdauer dem Expansionskanal zuzuführen (CO2-Ventileinheit geöffnet) und im Anschluss das Zuführen von flüssigem CO2 in den Expansionskanal für eine ausgewählte Schließdauer zu unterbrechen (CO2-Ventileinheit geschlossen). Dieser Vorgang aus Zuführen von flüssigem CO2 für eine Öffnungsdauer und nachfolgendem Unterbrechen der Zufuhr für eine Schließdauer wird dann periodisch wiederholt. Insofern wird das flüssige CO2 pulsweise in den Expansionskanal zugeführt, sodass pulsweise CO2-Schnee erzeugt und aus der Austrittsöffnung des Expansionskanals ausgegeben wird.

Auf diese Weise wird ein pulsierender CO2-Schnee-Strahl erzeugt. Ein solcher pulsierender CO2-Schnee-Strahl zeichnet sich durch eine erhöhte Reinigungswirkung aus, wobei die erhöhte Reinigungswirkung unter anderem auf zwei Wirkmechanismen beruht:
Zum einen werden CO2-Schneepartikel im pulsierenden Betrieb stärker beschleunigt als CO2-Schneepartikel, welche im kontinuierlichen Betrieb, also bei kontinuierlichem Zuführen von flüssigem CO2 in den Expansionskanal, gebildet werden.

Ferner wird vermutet, dass beim Öffnen der CO2-Ventileinheit, also bei erneuter Zufuhr von flüssigem CO2 in den Expansionskanal, durch schlagartiges Expandieren des flüssigen CO2s in dem Expansionskanal Schneepfropfen gebildet werden, welche im Vergleich zu den bei kontinuierlicher Zufuhr von flüssigem CO2 entstehenden CO2-Schneekristallen verhältnismäßig groß sind. Diese Schneepfropfen können dann beim Auftreffen auf eine zu reinigende Oberfläche einen vergleichsweise hohen Impuls übertragen, was die Reinigungswirkung erhöht.

Erfindungsgemäß werden die Öffnungsdauer und/oder die Schließdauer separat voneinander ausgewählt und dann zur Steuerung der CO2-Ventileinheit verwendet. Es ist möglich, dass entweder die Öffnungsdauer oder die Schließdauer einen voreingestellten Wert einnimmt und lediglich die jeweils andere Dauer ausgewählt wird. Es ist auch möglich, dass sowohl die Öffnungsdauer als auch die Schließdauer separat voneinander ausgewählt werden. Mit separat voneinander ist insbesondere gemeint, dass die Öffnungsdauer und die Schließdauer als zwei Parameter unabhängig voneinander auswählbar sind, es also keine Zwangsverknüpfung zwischen Öffnungsdauer und Schließdauer gibt. Öffnungsdauer und Schließdauer sind also nicht nur gemeinsam veränderbar, sondern separat voneinander. Durch das Auswählen der Öffnungsdauer und/oder der Schließdauer werden auch ein Verhältnis von Öffnungsdauer zu Schließdauer und eine Periodendauer, also die Summe aus Öffnungsdauer und darauffolgender Schließdauer, ausgewählt.

Dadurch, dass die Öffnungsdauer und die Schließdauer separat voneinander und variabel ausgewählt werden, kann der CO2-Schneestrahl-Prozess spezifisch auf eine zu bearbeitende Oberfläche angepasst werden. Beispielsweise kann in Abhängigkeit eines Materials oder eines Verschmutzungsgrads einer zu bearbeitenden Oberfläche das Verhältnis von Schneephasen zu Schneepausen, und somit ein von dem CO2-Schnee-Strahl bewirkter Temperatureintrag und/oder eine Abrasionswirkung angepasst werden.

Ein Auswählen der Öffnungsdauer und/oder der Schließdauer kann über wenigstens eine Auswahleinrichtung (bspw. in Form einer Eingabeeinrichtung eines Computers) erfolgen, vorzugsweise wobei die wenigstens eine Auswahleinrichtung mit einer Steuereinrichtung zum Ansteuern der CO2-Ventileinheit zumindest mittelbar gekoppelt ist. Insbesondere werden die Öffnungsdauer und die Schließdauer nachdem sie als Parameter des Verfahrens ausgewählt sind in einer solchen Steuereinrichtung hinterlegt, und die Steuereinrichtung steuert dann die CO2-Ventileinheit in Abhängigkeit von der gewählten Öffnungsdauer und Schließdauer an.

Im Rahmen der Erfindung ist ferner vorgesehen, dass eine die Zufuhr des Trägergases in die Mantelstrahldüse wahlweise freigebende oder sperrende Trägergas-Ventileinheit periodisch für eine Öffnungsdauer geöffnet und für eine Schließdauer geschlossen wird, und die Öffnungsdauer und/oder die Schließdauer separat voneinander ausgewählt werden und die Öffnungsdauer und die Schließdauer dann zur Steuerung der Trägergas-Ventileinheit verwendet werden. Insofern wird das Trägergas für eine ausgewählte Öffnungsdauer der Mantelstrahldüse zugeführt (Trägergas-Ventileinheit geöffnet) und im Anschluss wird das Zuführen des Trägergases in die Mantelstrahldüse für eine ausgewählte Schließdauer unterbrochen (Trägergas-Ventileinheit geschlossen). Dieser Vorgang aus Zuführen von Trägergas für eine Öffnungsdauer und nachfolgendem Unterbrechen der Zufuhr für eine Schließdauer wird dann periodisch wiederholt. Bei einem jeweiligen Öffnen der Trägergas-Ventileinheit entsteht dabei ein Druckstoß, welcher zu einer erhöhten Reinigungswirkung führt.

Für eine besonders effektive Reinigung erweist es sich als vorteilhaft, wenn die Öffnungsdauer und/oder die Schließdauer der CO2-Ventileinheit und/oder die Öffnungsdauer und/oder die Schließdauer der Trägergas-Ventileinheit wenigstens 0,05 ms, insbesondere wenigstens 0,25 ms, insbesondere wenigstens 0,5 ms, insbesondere wenigstens 1 ms, insbesondere wenigstens 2,5 ms, insbesondere wenigstens 4,5 ms, und höchstens 4 s, insbesondere höchstens 2 s, insbesondere höchstens 1 s, insbesondere höchstens 500 ms, insbesondere höchstens 50 ms, insbesondere höchstens 20 ms, insbesondere höchstens 10 ms, insbesondere höchstens 7,5 ms, insbesondere höchstens 5,5 ms betragen.

Ferner erweist es sich als vorteilhaft, wenn die Öffnungsdauer und/oder die Schließdauer der CO2-Ventileinheit und/oder die Öffnungsdauer und/oder die Schließdauer der Trägergas-Ventileinheit derart ausgewählt werden, dass die Summe der Öffnungsdauer und der darauffolgenden Schließdauer der CO2-Ventileinheit (= Periodendauer der CO2-Ventileinheit) bzw. die Summe der Öffnungsdauer und der darauffolgenden Schließdauer der Trägergas-Ventileinheit (= Periodendauer der Trägergas-Ventileinheit) wenigstens 1 ms, insbesondere wenigstens 2 ms, insbesondere wenigstens 5 ms, insbesondere wenigstens 8 ms, und höchstens 4 s, insbesondere höchstens 2 s, insbesondere höchstens 1 s, insbesondere höchstens 500 ms, insbesondere höchstens 20 ms, insbesondere höchstens 15 ms, insbesondere höchstens 12 ms, beträgt.

Insofern erweist es sich als vorteilhaft, wenn die Öffnungsdauer und/oder die Schließdauer der CO2-Ventileinheit und/oder die Öffnungsdauer und/oder die Schließdauer der Trägergas-Ventileinheit derart ausgewählt werden, dass sich ein Schaltzyklus aus Öffnen und Schließen periodisch mit einer Frequenz von wenigstens 1 Hz, insbesondere wenigstens 50 Hz, insbesondere wenigstens 65 Hz, insbesondere wenigstens 85 Hz, insbesondere wenigstens 95 Hz, und höchstens 1000 Hz, insbesondere höchstens 500 Hz, insbesondere höchstens 200 Hz, insbesondere höchstens 125 Hz, insbesondere höchstens 105 Hz, wiederholt.

Es erweist sich weiter als vorteilhaft, wenn die Öffnungsdauer und/oder die Schließdauer der CO2-Ventileinheit und/oder die Öffnungsdauer und/oder die Schließdauer der Trägergas-Ventileinheit derart ausgewählt werden, dass ein Verhältnis von Öffnungsdauer zu Schließdauer der CO2-Ventileinheit bzw. ein Verhältnis von Öffnungsdauer zu Schließdauer der Trägergas-Ventileinheit wenigstens 0,05, insbesondere wenigstens 0,25, insbesondere wenigstens 0,4, insbesondere wenigstens 0,6, insbesondere wenigstens 0,9, und höchstens 20, insbesondere höchstens 4, insbesondere höchstens 2,5, insbesondere höchstens 1,5, insbesondere höchstens 1,1 beträgt. Insbesondere beträgt ein Verhältnis von Öffnungsdauer zu Schließdauer der CO2-Ventileinheit und ein Verhältnis von Öffnungsdauer zu Schließdauer der Trägergas-Ventileinheit 1.

In Abhängigkeit des gewählten Verhältnisses von Öffnungsdauer zu Schließdauer der CO2-Ventileinheit kann eine Abrasionswirkung beim CO2-Schneestrahlen angepasst werden. Ein kleineres Verhältnis, also eine im Vergleich zur Öffnungsdauer lange Schließdauer, ist vorteilhaft für die Reinigung empfindlicher Oberflächen. Eine zu bearbeitende Oberfläche kann nämlich in den Schneepausen, also während der Schließdauer der CO2-Ventileinheit, wieder durch den Mantelstrahl aufgewärmt werden und entspannen. Ein größeres Verhältnis zwischen Öffnungsdauer und Schließdauer, also eine im Vergleich zur Öffnungsdauer kurze Schließdauer, ist hingegen für eine höhere Reinigungsleistung vorteilhaft.

Als besonders vorteilhaft erweist sich, wenn die Öffnungsdauer der CO2-Ventileinheit 120 ms beträgt und die Schließdauer der CO2-Ventileinheit 80 ms beträgt. Insofern beträgt ein Verhältnis zwischen Öffnungsdauer und Schließdauer vorzugsweise 1,5.

Es erweist sich weiter als vorteilhaft, wenn ein Öffnungsschaltzeitpunkt und/oder ein Schließschaltzeitpunkt der CO2-Ventileinheit ausgewählt und zur Steuerung der CO2-Ventileinheit verwendet werden und wenn ein Öffnungsschaltzeitpunkt und/oder ein Schließschaltzeitpunkt der Trägergas-Ventileinheit ausgewählt werden und zur Steuerung der Trägergas-Ventileinheit verwendet werden. Mit Öffnungsschaltzeitpunkt ist dabei der Zeitpunkt gemeint, an dem die CO2-Ventileinheit bzw. die Trägergas-Ventileinheit von dem die Zufuhr von flüssigem CO2 bzw. Trägergas sperrenden (geschlossenen) Zustand in den die Zufuhr von flüssigem CO2 bzw. Trägergas freigebenden (geöffneten) Zustand überführt wird. Mit Schließschaltzeitpunkt ist der Zeitpunkt gemeint, an dem die CO2-Ventileinheit bzw. die Trägergas-Ventileinheit von dem die Zufuhr von flüssigem CO2 bzw. Trägergas freigebenden (geöffneten) Zustand in den die Zufuhr von flüssigem CO2 bzw. Trägergas sperrenden (geschlossenen) Zustand überführt wird.

Der Öffnungsschaltzeitpunkt und/oder der Schließschaltzeitpunkt der CO2-Ventileinheit und der Öffnungsschaltzeitpunkt und/oder der Schließschaltzeitpunkt der Trägergas-Ventileinheit können derart ausgewählt werden, dass der Öffnungsschaltzeitpunkt bzw. der Schließschaltzeitpunkt der CO2-Ventileinheit mit dem Öffnungsschaltzeitpunkt bzw. dem Schließschaltzeitpunkt der Trägergas-Ventileinheit übereinstimmen. Insofern werden die CO2-Ventileinheit und die Trägergas-Ventileinheit zum gleichen Zeitpunkt geöffnet und geschlossen. Dann sind die Öffnungsdauer bzw. die Schließdauer der CO2-Ventileinheit und die Öffnungsdauer bzw. die Schließdauer der Trägergas-Ventileinheit gleich lang.

Im Rahmen einer alternativen möglichen Ausgestaltung können der Öffnungsschaltzeitpunkt bzw. der Schließschaltzeitpunkt der CO2-Ventileinheit und der Öffnungsschaltzeitpunkt bzw. der Schließschaltzeitpunkt der Trägergas-Ventileinheit derart ausgewählt werden, dass der Öffnungsschaltzeitpunkt bzw. der Schließschaltzeitpunkt der CO2-Ventileinheit und der Öffnungsschaltzeitpunkt bzw. der Schließschaltzeitpunkt der Trägergas-Ventileinheit zueinander zeitlich versetzt sind. Dann liegt eine Phasenverschiebung zwischen dem Öffnen bzw. dem Schließen der CO2-Ventileinheit und dem Öffnen bzw. dem Schließen der Trägergas-Ventileinheit vor.

Erfindungsgemäß ist jedenfalls vorgesehen dass die Öffnungsdauer bzw. die Schließdauer der CO2-Ventileinheit und die Öffnungsdauer bzw. die Schließdauer der Trägergas-Ventileinheit derart ausgewählt werden, dass die Öffnungsdauer bzw. die Schließdauer der CO2-Ventileinheit und die Öffnungsdauer bzw. die Schließdauer der Trägergas-Ventileinheit gleich lang sind. Insofern sind ein Verhältnis von Öffnungsdauer zu Schließdauer der CO2-Ventileinheit und ein Verhältnis von Öffnungsdauer und Schließdauer der Trägergas-Ventileinheit gleich gewählt. Dann bleibt eine Phasenbeziehung zwischen dem Öffnen und Schließen der CO2-Ventileinheit und dem Öffnen und Schließen der Trägergas-Ventileinheit während des Betriebs gleich.

Weiter ist erfindungsgemäß vorgesehen, dass das Öffnen bzw. das Schließen der CO2-Ventileinheit und das Öffnen bzw. das Schließen der Trägergas-Ventileinheit durch Öffnen bzw. Schließen einer gemeinsamen Ventileinheit erfolgen. Insofern wird das Zuführen von flüssigem CO2 in den Expansionskanal und das Zuführen des Trägergases in die Mantelstrahldüse in einem geöffneten Zustand der gemeinsamen Ventileinheit für eine Öffnungsdauer gemeinsam freigegeben und in einem geschlossenen Zustand der gemeinsamen Ventileinheit für eine Schließdauer gemeinsam gesperrt. Bei einer solchen Ausgestaltung werden dann eine Öffnungsdauer und/oder eine Schließdauer der gemeinsamen Ventileinheit separat voneinander ausgewählt und dann die Öffnungsdauer und die Schließdauer zur Steuerung der gemeinsamen Ventileinheit verwendet. Ein Auswählen der Öffnungsdauer und/oder der Schließdauer der gemeinsamen Ventileinheit, und oder das Ansteuern der gemeinsamen Ventileinheit können analog zu der CO2-Ventileinheit erfolgen.

Im Hinblick auf ein zuverlässiges Öffnen bzw. Schließen der CO2-Ventileinheit und/oder der Trägergas-Ventileinheit oder der gemeinsamen Ventileinheit erweist es sich als vorteilhaft, wenn die CO2-Ventileinheit und/oder die Trägergas-Ventileinheit oder die gemeinsame Ventileinheit zum Öffnen bzw. Schließen mittels eines elektrischen oder pneumatischen Steuersignals angesteuert werden. Alternativ ist es möglich, dass eine Ansteuerung über einen fluidischen Oszillator erfolgt. Insbesondere erweist es sich als vorteilhaft, wenn zum Öffnen bzw. Schließen der CO2-Ventileinheit und/oder der Trägergas-Ventileinheit oder der gemeinsamen Ventileinheit ein pneumatisch oder elektromagnetisch oder elektromotorisch oder piezoelektrisch oder hydraulisch betriebener Aktor angesteuert wird.

Um eine Reinigungswirkung im Betrieb - also im Zuge eines Reinigungsprozesses mittels des CO2-Schnee-Strahls - an geänderte Verhältnisse anpassen zu können, erweist es sich als vorteilhaft, wenn die Öffnungsdauer bzw. die Schließdauer der CO2-Ventileinheit und/oder die Öffnungsdauer bzw. die Schließdauer der Trägergas-Ventileinheit verändert wird. Insbesondere kann eine Veränderung in Abhängigkeit eines Reinigungsstadiums der zu reinigenden Oberfläche und/oder in Abhängigkeit von weiteren Betriebsparametern (bspw. einer gemessenen Oberflächenrauheit, Oberflächentemperatur, etc.) erfolgen.

Die vorstehend genannte Aufgabe wird ferner durch eine Vorrichtung zur Durchführung des vorstehend erläuterten Verfahrens mit den Merkmalen des Anspruchs 8 gelöst.

Vorteile und Ausgestaltungen der erfindungsgemäßen Vorrichtung wurden zum Teil bereits vorstehend unter Bezugnahme auf die Vorteile und die Ausgestaltungen des erfindungsgemäßen Verfahrens erläutert, sodass nachstehend hierauf Bezug genommen wird.

Die Vorrichtung weist ein Strahlwerkzeug mit einem Expansionskanal zum Erzeugen eines CO2-Gas/CO2-Schnee Gemisches ausgehend von flüssigem CO2 aus, wobei der Expansionskanal eine Eintrittsöffnung zum Zuführen von flüssigem CO2 und eine Austrittsöffnung zum Ausgeben des CO2-Gas/CO2-Schnee Gemisches aufweist. Der Expansionskanal kann durch einen insbesondere zylindrischen Hohlraum eines Rohrkörpers, insbesondere durch ein Kapillarrohr gebildet sein. Als vorteilhaft erweist es sich, wenn der Expansionskanal durch einen Hohlraum gebildet ist, der sich in einer Strahlrichtung gesehen, insbesondere konisch, aufweitet.

Die Vorrichtung weist ferner eine den Expansionskanal umgebende Mantelstrahldüse zum Erzeugen eines Mantelstrahls aus einem Trägergas auf, wobei die Mantelstrahldüse derart ausgebildet und angeordnet ist, dass der Mantelstrahl das aus der Austrittsöffnung des Expansionskanals ausgegebene CO2-Gas/CO2-Schnee Gemisch in einer Umfangsrichtung umgibt und in einer Strahlrichtung beschleunigt. Zum Erzeugen eines stabilen Mantelstrahls und einer effektiven Beschleunigung des CO2-Gas/CO2-Schnee Gemisches erweist es sich als vorteilhaft, wenn die Mantelstrahldüse den Expansionskanal konzentrisch umschließt. Als besonders vorteilhaft erweist es sich, wenn die Mantelstrahldüse als Überschalldüse (Laval-Düse) ausgebildet ist. Auf diese Weise kann die Geschwindigkeit der Schneepartikel und somit ein auf eine Oberfläche übertragbarer Impuls weiter erhöht werden.

Die erfindungsgemäße Vorrichtung kennzeichnet sich durch eine CO2-Ventileinheit, welche im Betrieb mit einer Zuführeinrichtung für flüssiges CO2 zusammenwirkt und dazu eingerichtet ist, eine Zufuhr von flüssigem CO2 in den Expansionskanal in einem geöffneten Zustand freizugeben und in einem geschlossenen Zustand zu sperren. Die Zuführeinrichtung für flüssiges CO2 umfasst beispielhaft und bevorzugt wenigstens einen Hochdruck- oder Niederdrucktank für flüssiges CO2, sowie wenigstens eine Fluidleitung zum Leiten von flüssigem CO2 von dem wenigstens einen Hochdruck- oder Niederdrucktank zu der Vorrichtung, insbesondere zu dem Strahlwerkzeug. Grundsätzlich ist es möglich, dass die CO2-Ventileinheit von dem Strahlwerkzeug, insbesondere von dem Expansionskanal, beabstandet angeordnet ist, bspw. im Bereich einer Fluidleitung der CO2-Zuführeinrichtung. Als besonders vorteilhaft erweist es sich jedoch, wenn die CO2-Ventileinheit an dem Strahlwerkzeug angeordnet ist, insbesondere im Bereich der Eintrittsöffnung des Expansionskanals. Dann ist eine Wegstrecke zwischen CO2-Ventileinheit und Expansionskanal reduziert, sodass sich nur ein geringes Volumen zwischen Expansionskanal und CO2-Ventileinheit befindet. Dies ist für eine schnelle Schaltfrequenz der CO2-Ventileinheit vorteilhaft.

Die erfindungsgemäße Vorrichtung kennzeichnet sich ferner durch eine CO2-Steuereinrichtung zum Ansteuern der CO2-Ventileinheit. Bei der CO2-Steuereinrichtung kann es sich beispielhafterweise um eine programmierbare Steuereinrichtung (bspw. SPS, Industriecomputer, etc.) handeln.

Die erfindungsgemäße Vorrichtung kennzeichnet sich ferner durch eine erste Auswahleinrichtung zum Auswählen einer Öffnungsdauer und/oder einer Schließdauer der CO2-Ventileinheit. Die Auswahleinrichtung ist derart ausgebildet, dass die Öffnungsdauer und die Schließdauer separat voneinander, also unabhängig voneinander, ausgewählt werden können. Zu diesem Zweck kann die erste Auswahleinrichtung zwei mit der CO2-Steuereinrichtung zumindest mittelbar gekoppelte Auswahleinheiten umfassen, wobei eine erste Auswahleinheit zum Auswählen der Öffnungsdauer und eine zweite Auswahleinheit zum Auswählen der Schließdauer dienen.

Im Hinblick auf ein schnelles Freigeben und Sperren der CO2-Zufuhr erweist es sich als vorteilhaft, wenn die CO2-Ventileinheit ein Nadelventil umfasst. Ein solches Nadelventil umfasst vorzugsweise eine Ventilnadel, welche einen Ventilkörper der CO2-Ventileinheit bildet und zwischen einer die Zufuhr des flüssigen CO2s in den Expansionskanal freigebenden Nadel-Offenstellung und einer die Zufuhr des flüssigen CO2s in den Expansionskanal sperrenden Nadel-Schließstellung verschiebbar ist. Insbesondere ist das Nadelventil im Bereich der Eintrittsöffnung des Expansionskanals angeordnet, was für kurze Öffnungs- bzw. Schließdauern vorteilhaft ist.

Die Vorrichtung umfasst weiter eine Trägergas-Ventileinheit, welche im Betrieb mit einer Trägergas-Zuführeinrichtung zusammenwirkt und dazu eingerichtet ist, eine Zufuhr von Trägergas in die Mantelstrahldüse in einem geöffneten Zustand freizugeben und in einem geschlossenen Zustand zu sperren.

Die Vorrichtung weist weiter eine Trägergas-Steuereinrichtung zum Ansteuern der Trägergas-Ventileinheit und eine zweite Auswahleinrichtung zum Auswählen einer Öffnungsdauer und/oder einer Schließdauer der Trägergas-Ventileinheit aufweist. Die erste und die zweite Auswahleinrichtung sind nach der Erfindung durch eine gemeinsame Auswahleinrichtung gebildet.

Im Rahmen ist weiter vorgesehen, dass die CO2-Ventileinheit und die Trägergas-Ventileinheit durch eine gemeinsame Ventileinheit gebildet sind, welche im Betrieb mit einer CO2-Zuführeinrichtung und einer Trägergas-Zuführeinrichtung zusammenwirkt und dazu eingerichtet ist, die Zufuhr von flüssigem CO2 in den Expansionskanal und die Zufuhr von Trägergas zu der Mantelstrahldüse gleichzeitig in einem geöffneten Zustand freizugeben und in einem geschlossenen Zustand zu sperren. Durch eine solche Ausgestaltung wird ein besonders kompakter Aufbau der Vorrichtung erzielt, was bei einem Einsatz in automatisierten Bearbeitungsanlagen vorteilhaft ist. Zudem zeichnet sich eine solche Vorrichtung durch einen geringeren Wartungsaufwand auf.

Die gemeinsame Ventileinheit umfasst einen Ventilkolben und eine Ventilnadel, wobei der Ventilkolben in einem Strahlwerkzeuggehäuse zwischen einer die Zufuhr des Trägergases zu der Mantelstrahldüse freigebenden Kolben-Offenstellung und einer die Zufuhr des Trägergases zu der Mantelstrahldüse sperrenden Kolben-Schließstellung verschiebbar gelagert ist, wobei die Ventilnadel zwischen einer die Zufuhr des flüssigen CO2s in den Expansionskanal freigebenden Nadel-Offenstellung und einer die Zufuhr des flüssigen CO2s in den Expansionskanal sperrenden Nadel-Schließstellung verschiebbar gelagert ist, und wobei der Ventilkolben mit der Ventilnadel derart gekoppelt ist, dass die Ventilnadel bei einem Überführen des Ventilkolbens aus der Kolben-Offenstellung in die Kolben-Schließstellung aus der Nadel-Offenstellung in die Nadel-Schließstellung überführt wird bzw. dass der Ventilkolben bei einem Überführen der Ventilnadel aus der Nadel-Offenstellung in die Nadel-Schließstellung aus der Kolben-Offenstellung in die Kolben-Schließstellung überführt wird. Eine solche gemeinsame Ventileinheit ist kostengünstig und kompakt.

Zum Überführen des Ventilkolbens aus der Kolben-Offenstellung in die Kolben-Schließstellung bzw. zum Überführen der Ventilnadel aus der Nadel-Offenstellung in die Nadel-Schließstellung erweist es sich als vorteilhaft, wenn die Vorrichtung einen pneumatisch oder elektromagnetisch oder piezoelektrisch oder elektromotorisch betreibbaren Aktor zum Verschieben des Kolbens und/oder der Ventilnadel aufweist. Hierdurch wird ein zuverlässiges und schnelles Öffnen bzw. Schließen der gemeinsamen Ventileinheit ermöglicht.

Weitere Merkmale, Einzelheiten und Vorteile der Erfindung ergeben sich aus den beigefügten Patentansprüchen und der zeichnerischen Darstellung und nachfolgenden Beschreibung von bevorzugten Ausführungsformen der erfindungsgemäßen Vorrichtung.

In der Zeichnung zeigt:
Figur 1 eine vereinfachte schematische Darstellung einer Vorrichtung zur Durchführung des erfindungsgemäßen Verfahrens;
Figur 2a-d jeweils zwei zusammengehörige Diagramme zur Erläuterung verschiedener Ausgestaltungen des Verfahrens, wobei in einem jeweiligen oberen Diagramm (I) ein Schaltzustand der CO2-Ventileinheit über der Zeit aufgetragen ist und in dem jeweiligen unteren Diagramm (II) ein Schaltzustand der Trägergas-Ventileinheit über der Zeit aufgetragen ist;
Figur 3 eine schematische Darstellung einer bevorzugten Ausgestaltung einer Vorrichtung zur Durchführung des erfindungsgemäßen Verfahrens in einer ersten geschnittenen Ansicht;
Figur 4 die Vorrichtung gemäß Figur 3 in einer zweiten geschnittenen Ansicht mit gemeinsamer Ventileinheit in einem geöffneten Zustand;
Figur 5 die Vorrichtung gemäß Figur 4 gemeinsamer Ventileinheit in einem geschlossenen Zustand; und
Figur 6 eine schematische Darstellung der Vorrichtung gemäß Figur 3 mit versetztem Trägergas-Anschluss.

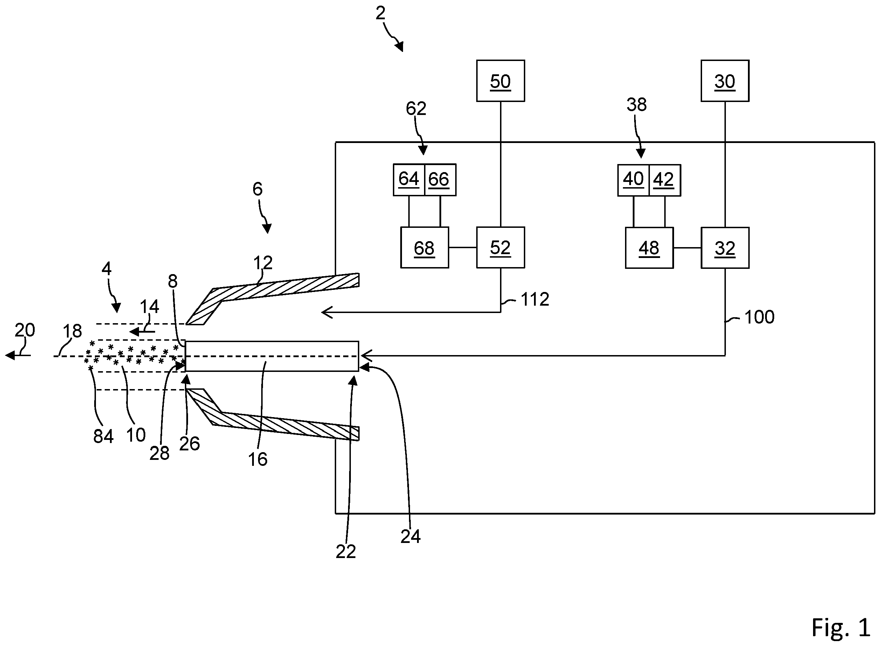

Figur 1 zeigt eine vereinfachte schematische Darstellung einer insgesamt mit dem Bezugszeichen 2 bezeichneten Vorrichtung zum Erzeugen eines CO2-Schnee-Strahls 4, anhand derer beispielhaft das erfindungsgemäße Verfahren erläutert werden soll.

Die Vorrichtung 2 umfasst ein Strahlwerkzeug 6 mit einem Expansionskanal 8 zum Erzeugen eines CO2-Gas/CO2-Schnee Gemisches 10 ausgehend von flüssigem CO2 und mit einer Mantelstrahldüse 12 zum Erzeugen eines Mantelstrahls 14 aus einem Trägergas, beispielhaft und bevorzugt aus Reinstluft oder Reinststickstoff.

Der Expansionskanal 8 ist im beispielhaft dargestellten Fall durch einen Hohlraum einer zylindrischen Düsennadel 16 gebildet, welcher sich entlang einer zentralen Achse 18 in einer Strahlrichtung 20 erstreckt. Der Expansionskanal 8 weist an seinem stromaufwärts gelegenen Ende 22, also an seinem in Strahlrichtung 20 hinteren Ende 22, eine Eintrittsöffnung 24 zum Zuführen von flüssigem CO2 auf. Der Expansionskanal 8 weist ferner an seinem stromabwärts gelegenen Ende 26, also an seinem in Strahlrichtung 20 vorderen Ende 26, eine Austrittsöffnung 28 zum Ausgeben des in dem Expansionskanal 8 gebildeten CO2-Gas/CO2-Schnee Gemischs 10 auf.

Die Mantelstrahldüse 12 ist im beispielhaft dargestellten Fall als Ringdüse ausgebildet, welche die Düsennadel 16 vorzugsweise konzentrisch umgibt.

Zur Versorgung mit flüssigem CO2 ist die Vorrichtung 2 im Betrieb an eine Zuführeinrichtung 30 für flüssiges CO2 angekoppelt. Die CO2-Zuführeinrichtung 30 kann beispielhaft und bevorzugt einen Tank für flüssiges CO2 und eine Fluidleitung von dem Tank zu der Vorrichtung 2 umfassen. Bei dem Tank kann es sich um einen Niederdrucktank handeln. Dann wird flüssiges CO2 insbesondere und beispielhaft bei einem Druck von ca. 20 bar der Vorrichtung 2 zugeführt. Es ist auch möglich, dass der Tank als Hochdrucktank ausgebildet ist. Dann wird flüssiges CO2 insbesondere und beispielhaft bei einem Ausgangsdruck von ca. 60 bar der Vorrichtung 2 zugeführt.

Die Vorrichtung 2 weist ferner eine CO2-Ventileinheit 32 auf, welche im Betrieb mit der CO2-Zuführeinrichtung 30 zusammenwirkt und dazu eingerichtet ist, in einem geöffneten Zustand eine Zufuhr von flüssigem CO2 in den Expansionskanal 8 freizugeben und in einem geschlossenen Zustand zu sperren.

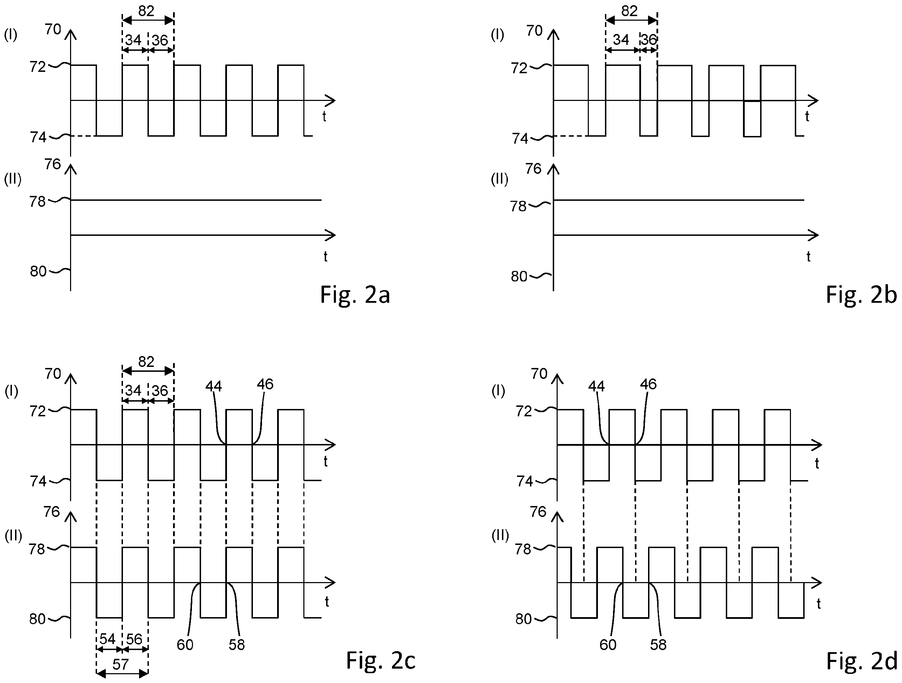

Eine Öffnungsdauer 34 und eine Schließdauer 36 (vgl. Figuren 2a-d) der CO2-Ventileinheit 32 sind über eine erste Auswahleinrichtung 38 separat voneinander auswählbar. Beispielhaft und bevorzugt umfasst die erste Auswahleinrichtung 38 eine erste Auswahleinheit 40 zum Auswählen der Öffnungsdauer 34 der CO2-Ventileinheit 32 und eine zweite Auswahleinheit 42 zum Auswählen der Schließdauer 36 der CO2-Ventileinheit 32.

Die erste Auswahleinrichtung 38 ist zumindest mittelbar mit einer CO2-Steuereinrichtung 48 gekoppelt, welche dazu ausgebildet ist, die CO2-Ventileinheit 32, insbesondere in Abhängigkeit einer ausgewählten Öffnungsdauer 34 und einer ausgewählten Schließdauer 36 anzusteuern.

Die Vorrichtung 2 ist im Betrieb ferner an eine Trägergas-Zuführeinrichtung 50 zum Zuführen von Trägergas zu der Vorrichtung 2 angekoppelt. Bei der Trägergas-Zuführeinrichtung 50 kann es sich beispielsweise um eine Gebäude-Druckluftleitung oder Stickstoffleitung handeln.

Optional kann die Vorrichtung 2 eine Trägergas-Ventileinheit 52 aufweisen, welche mit der Trägergas-Zuführeinrichtung 50 zusammenwirkt und dazu eingerichtet ist, die Zufuhr von Trägergas in die Mantelstrahldüse 12 in einem geöffneten Zustand freizugeben und in einem geschlossenen Zustand zu sperren.

Zum Auswählen einer Öffnungsdauer 54 und/oder einer Schließdauer 56 der Trägergas-Ventileinheit 52 (vgl. Figuren 2c und 2d) kann die Vorrichtung 2 ferner eine zweite Auswahleinrichtung 62 aufweisen. Die zweite Auswahleinrichtung 62 kann beispielhaft und bevorzugt in analoger Weise zu der ersten Auswahleinrichtung 40 eine erste Auswahleinheit 64 zum Auswählen der Öffnungsdauer 54 der Trägergas-Ventileinheit 52 und eine zweite Auswahleinheit 66 zum Auswählen der Schließdauer 56 der Trägergas-Ventileinheit 52 aufweisen.

Die Vorrichtung 2 kann ferner eine mit der zweiten Auswahleinrichtung 62 zumindest mittelbar gekoppelte Trägergas-Steuereinrichtung 68 zum Ansteuern der Trägergas-Ventileinheit 52 in Abhängigkeit einer ausgewählten Öffnungsdauer 54 und Schließdauer 56 aufweisen.

Nachfolgend werden unter Bezug auf die in Figur 1 beispielhaft dargestellte Vorrichtung 2 verschiedene Ausgestaltungen des erfindungsgemäßen Verfahrens anhand der Figuren 2a bis 2d erläutert.

Die Figuren 2a bis 2d zeigen jeweils zwei korrespondierende Diagramme, wobei in einem jeweiligen oberen Diagramm (I) ein Schaltzustand 70 (geöffneter Zustand 72 und geschlossener Zustand 74) der CO2-Ventileinheit 32 über der Zeit t aufgetragen ist und in einem jeweiligen unteren Diagramm (II) ein Schaltzustand 76 (geöffneter Zustand 78 und geschlossener Zustand 80) der Trägergas-Ventileinheit 52 über der Zeit t aufgetragen ist.

Gemäß einer ersten in den Figuren 2a und 2b dargestellten Ausgestaltung des Verfahrens wird zum Erzeugen eines pulsierenden CO2-Schnee-Strahls 4 zunächst mittels der ersten Auswahleinrichtung 38 eine Öffnungsdauer 34 und/oder eine Schließdauer 36 der CO2-Ventileinheit 32 ausgewählt.

Durch Auswählen der Öffnungsdauer 34 und/oder der Schließdauer 36 der CO2-Ventileinheit 31 wird auch die Summe aus Öffnungsdauer 34 und Schließdauer 36 (Periodendauer 82) und das Verhältnis von Öffnungsdauer 34 zu Schließdauer 36 eingestellt. Die Periodendauer 82 und ein Verhältnis von Öffnungsdauer zu Schließdauer sind dabei unabhängig voneinander einstellbar (vgl. Figuren 2a und 2b) .

In Abhängigkeit der gewählten Öffnungsdauer 34 und/oder Schließdauer 36 sendet die erste Auswahleinrichtung 38 dann entsprechende Informationen an die CO2-Steuereinrichtung 48. Die CO2-Steuereinrichtung 48 steuert dann die CO2-Ventileinheit 32 in Abhängigkeit der ausgewählten Öffnungsdauer 34 und Schließdauer 36 an, und zwar derart, dass die CO2-Ventileinheit 32 periodisch für die ausgewählte Öffnungsdauer 34 geöffnet und anschließend für die ausgewählte Schließdauer 36 geschlossen wird (vgl. Figur 2a, dort Diagramm I). Die CO2-Ventileinheit 32 wird also abwechselnd geöffnet und geschlossen. Während der Öffnungsdauer 34 der CO2-Ventileinheit 32 wird flüssiges CO2 in den Expansionskanal 8 zugeführt. Während der Schließdauer 36 der CO2-Ventileinheit 32 ist eine Zufuhr von flüssigem CO2 in den Expansionskanal 8 gesperrt.

Über die Erstreckung des Expansionskanals 8 in Strahlrichtung 20 fällt der Druck vom gerade anliegenden Ausgangsdruck an der Eintrittsöffnung 24 bis auf Umgebungsdruck (ca. 1 bar) an der Austrittsöffnung 28 ab. Mit fallendem Druck findet eine schrittweise Phasenumwandlung von flüssigem CO2 in gasförmiges CO2 bei gleichzeitiger Abkühlung des Gemisches statt. Bei Unterschreiten des Drucks am Tripelpunkt von CO2 (5,185 bar) wandelt sich die verbleibende flüssige Phase schrittweise in festes CO2 in Form von CO2-Schneekristallen 84, sog. "CO2-Schnee", um. Es sind dann drei Phasen (fest, flüssig, gasförmig) vorhanden. Die entstehenden CO2-Schneekristalle 84 werden durch die Gasströmung mitgerissen, beschleunigt und gemeinsam mit dem CO2-Gas als CO2-Gas/CO2-Schnee Gemisch 10 aus der Austrittsöffnung 28 des Expansionskanals 8 ausgegeben. Dort wird das CO2-Gas/CO2-Schnee Gemisch 10 von dem Mantelstrahl dem Mantelstrahl 14 in einer Umfangsrichtung umgeben, gebündelt und in Strahlrichtung 20 zu dem CO2-Schnee-Strahl 4 beschleunigt.

Dadurch, dass das flüssige CO2 durch Öffnen und Schließen der CO2-Ventileinheit 32 pulsweise dem Expansionskanal 8 zugeführt wird bzw. unter pulsierender Druckbeaufschlagung steht, wird folglich auch das CO2-Gas/CO2-Schnee Gemisch 10 pulsweise aus der Austrittsöffnung 28 des Expansionskanals 8 ausgegeben.

Zum Erzeugen des Mantelstrahls 14 wird Trägergas über die Trägergas-Zuführeinrichtung 50 der Mantelstrahldüse 12 kontinuierlich zugeführt und in dieser beschleunigt. Insofern wird ein kontinuierlicher Mantelstrahl 14 erzeugt. Eine kontinuierliche Zufuhr von Trägergas in die Mantelstrahldüse 14 kann dadurch erzielt werden, dass eine optionale Trägergas-Ventileinheit 52 dauerhaft geöffnet ist, also theoretisch eine Schließdauer 56 null Sekunden beträgt (vgl. Figuren 2a und 2b). Es ist auch möglich, dass eine entsprechende Vorrichtung 2 überhaupt keine Trägergas-Ventileinheit 52 aufweist.

Im Rahmen einer weiteren in den Figuren 2c und 2d dargestellten Ausgestaltung des Verfahrens kann auch das Trägergas pulsweise der Mantelstrahldüse 12 zugeführt werden. Dann wird zunächst eine Öffnungsdauer 54 und/oder eine Schließdauer 56 der Trägergas-Ventileinheit 52 mittels der zweiten Auswahleinrichtung 62 ausgewählt. In Abhängigkeit der gewählten Öffnungsdauer 54 und/oder Schließdauer 56 sendet die zweite Auswahleinrichtung 62 dann entsprechende Informationen an die Trägergas-Steuereinrichtung 68, welche dann die Trägergas-Ventileinheit 52 derart ansteuert, dass die Trägergas-Ventileinheit 52 periodisch für die ausgewählte Öffnungsdauer 54 geöffnet und im Anschluss für die ausgewählte Schließdauer 56 geschlossen wird. Eine Summe aus Öffnungsdauer 54 und darauffolgender Schließdauer 56 bildet eine Periodendauer 57 der Trägergas-Ventileinheit 52.

Gemäß einer weiteren Ausgestaltung des Verfahrens kann zusätzlich auch ein Öffnungsschaltzeitpunkt 44 und ein Schließschaltzeitpunkt 46 der CO2-Ventileinheit 32 ausgewählt und zur Steuerung der CO2-Ventileinheit 32 verwendet werden und/oder ein Öffnungsschaltzeitpunkt 58 und ein Schließschaltzeitpunkt 60 der Trägergas-Ventileinheit 52 ausgewählt und zur Steuerung der Trägergas-Ventileinheit 52 verwendet werden (vgl. Figuren 2c und 2d).

Zu diesem Zweck kann die erste Auswahleinrichtung 38 eine weitere Auswahleinheit (nicht dargestellt) zum Auswählen des Öffnungsschaltzeitpunkts 44 und/oder des Schließschaltzeitpunkts 46 der CO2-Ventileinheit 32 aufweisen und die zweite Auswahleinrichtung 62 kann eine weitere Auswahleinheit (nicht dargestellt) zum Auswählen des Öffnungsschaltzeitpunkts 58 und/oder des Schließschaltzeitpunkts 60 der Trägergas-Ventileinheit 52 aufweisen.

Bei einer in Figur 2c dargestellten Ausgestaltung sind der Öffnungsschaltzeitpunkt 44 und der Schließschaltzeitpunkt 46 der CO2-Ventileinheit 32 und/oder der Öffnungsschaltzeitpunkt 58 und der Schließschaltzeitpunkt 60 der Trägergas-Ventileinheit 52 derart ausgewählt, dass der Öffnungsschaltzeitpunkt 44 und der Schließschaltzeitpunkt 46 der CO2-Ventileinheit 32 mit dem Öffnungsschaltzeitpunkt 54 und dem Schließschaltzeitpunkt 56 der Trägergas-Ventileinheit 52 übereinstimmen. Dann werden die CO2-Ventileinheit 32 und die Trägergas-Ventileinheit 52 jeweils gleichzeitig geöffnet bzw. geschlossen (vgl. Figur 2c). In diesem Fall sind die Öffnungsdauer 34 bzw. die Schließdauer 36 der CO2-Ventileinheit 32 und die Öffnungsdauer 54 bzw. die Schließdauer 56 der Trägergas-Ventileinheit 52 gleich lang.

Bei einer weiteren in Figur 2d dargestellten Ausgestaltung sind der Öffnungsschaltzeitpunkt 44 und der Schließschaltzeitpunkt 46 der CO2-Ventileinheit 32 und/oder der Öffnungsschaltzeitpunkt 58 und der Schließschaltzeitpunkt 60 der Trägergas-Ventileinheit 52 derart ausgewählt, dass der Öffnungsschaltzeitpunkt 44 und der Schließschaltzeitpunkt 46 der CO2-Ventileinheit 32 mit dem Öffnungsschaltzeitpunkt 58 und dem Schließschaltzeitpunkt 60 der Trägergas-Ventileinheit 52 zueinander zeitlich versetzt sind (vgl. Figur 2d).

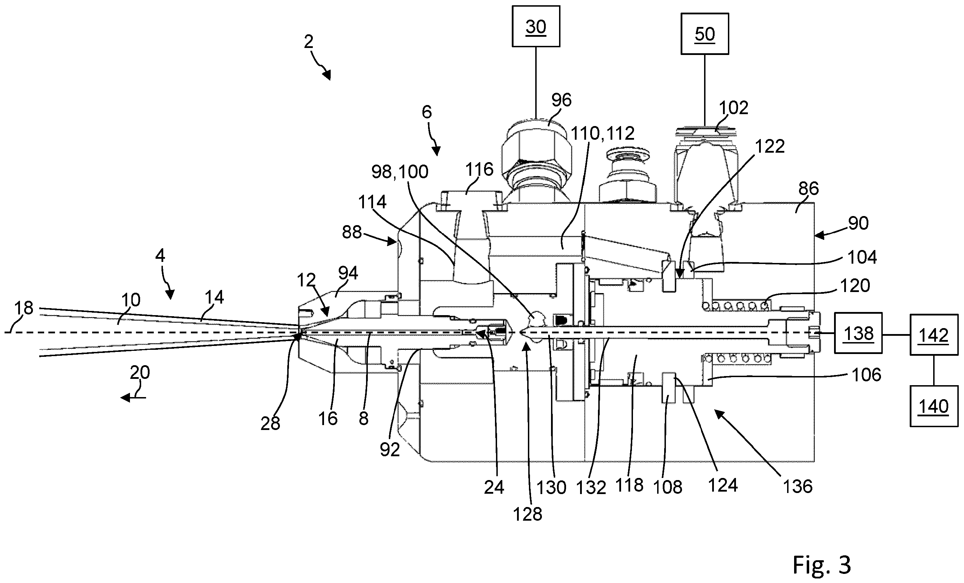

In den Figuren 3 bis 5 ist eine bevorzugte Ausgestaltung einer Vorrichtung 2 zum Durchführen des Verfahrens dargestellt, wobei für identische oder einander entsprechende Merkmale jeweils dieselben Bezugszeichen wie in Figur 1 verwendet werden.

Die Vorrichtung 2 umfasst ein Strahlwerkzeug 6 mit einem sich entlang einer zentralen Achse 18 erstreckenden Strahlwerkzeuggehäuse 86. Das Strahlwerkzeuggehäuse 86 weist eine in Strahlrichtung 20 gesehen vordere Stirnseite 88 und eine in Strahlrichtung gesehen hintere Stirnseite 90 auf.

In dem vorliegenden Beispiel ist der Expansionskanal 8 durch einen Hohlraum einer Düsennadel 16 gebildet, welche in einer zentralen axialen Bohrung 92 in der vorderen Stirnseite 88 des Strahlwerkzeuggehäuses 86 aufgenommen ist. Die Düsennadel 16 weist eine Eintrittsöffnung 24 zum Zuführen von flüssigem CO2 in den Expansionskanal 8 und eine Austrittsöffnung 28 zum Ausgeben des CO2-Gas/CO2-Schnee Gemisches 10 auf.

Die Mantelstrahldüse 12 ist im vorliegenden Beispiel durch die Außenkontur der den Expansionskanal 8 enthaltenden Düsennadel 16 und durch die Innenkontur eines Düsenkopfes 94 gebildet. Der Düsenkopf 94 ist beispielhaft und bevorzugt konzentrisch um die Düsennadel 16 angeordnet und an der vorderen Stirnseite 88 des Strahlwerkzeuggehäuses 86 befestigt.

Insbesondere sind die Außenkontur der Düsennadel 16 und die Innenkontur des Düsenkopfes 84 derart ausgebildet, dass sich im montierten Zustand eine Laval-Geometrie ausbildet. Dann kann das zugeführte Trägergas durch die Mantelstrahldüse 12 auf hohe Geschwindigkeit, insbesondere Überschall, beschleunigt werden.

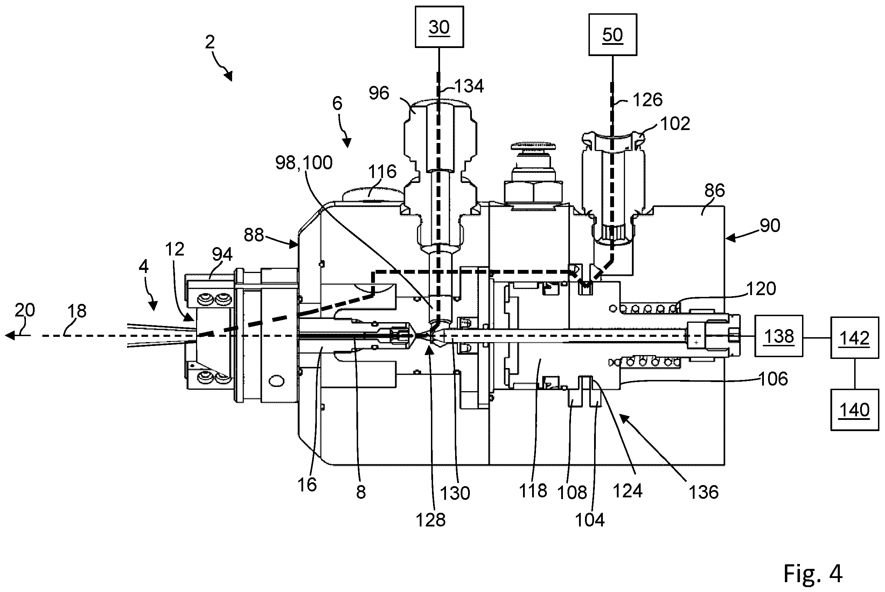

Zur Versorgung mit flüssigem CO2 weist die Vorrichtung 2 einen an dem Strahlwerkzeuggehäuse 86 angeordneten CO2-Anschluss 96 zum Anschluss an eine CO2-Zuführeinrichtung 30 (siehe oben) auf. In dem Strahlwerkzeuggehäuse 86 sind ferner kanalförmige Öffnungen 98 vorgesehen, welche eine Fluidleitung 100 (vgl. Figur 4) von dem CO2-Anschluss 96 zu der Eintrittsöffnung 24 des Expansionskanals 8 bilden (vgl. Figur 3) .

Die Vorrichtung 2 weist ferner einen an dem Strahlwerkzeuggehäuse 86 angeordneten Trägergas-Anschluss 102 zum Anschluss an eine Trägergas-Zuführeinrichtung 50 (siehe oben) auf. Wie aus Figur 4 ersichtlich, mündet der Trägergas-Anschluss 102 über eine erste Ringnut 104 in einen Kolbenraum 106 ein, welcher beispielhaft und bevorzugt durch eine zentrale axiale Bohrung in dem Strahlwerkzeuggehäuse 86 gebildet ist. In dem Kolbenraum 106 ist eine zweite Ringnut 108 angeordnet, welche nahe der ersten Ringnut 104 angeordnet ist. Die zweite Ringnut 108 kommuniziert mit der Mantelstrahldüse 12 über mehrere kanalförmige Öffnungen 110 in dem Strahlwerkzeuggehäuse 86, welche eine Fluidleitung 112 bilden. Wie aus Figur 3 ersichtlich, ist eine radiale Öffnung 114 mittels eines Dichtstopfens 116 verschlossen.

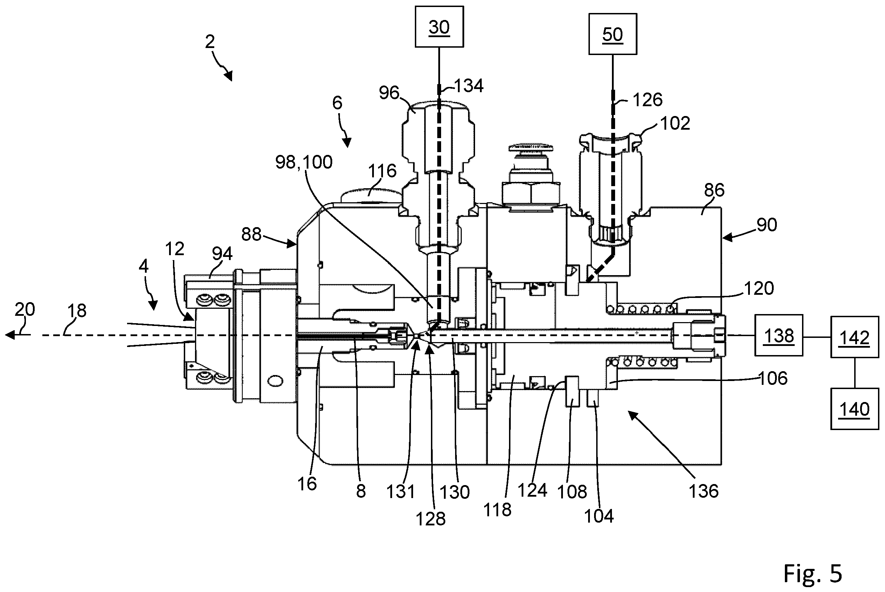

In dem Kolbenraum 106 ist ein Ventilkolben 118 angeordnet, welcher zwischen einer Kolben-Offenstellung (vgl. Figur 4) und einer Kolben-Schließstellung (vgl. Figur 5 und Figur 3) entlang der zentralen Achse 18 verstellbar gelagert ist. Der Ventilkolben 118 ist mittels einer Feder 120 in Richtung der Kolben-Schließstellung kraftbeaufschlagt.

Der Ventilkolben 118 weist an seiner Mantelfläche 122 eine umlaufende Nut 124 auf, welche als Steuerkante dient und in der Kolben-Offenstellung des Ventilkolbens 118 die erste Ringnut 104 und die zweite Ringnut 108 miteinander strömungsverbindet - also die erste Ringnut 104 und die zweite Ringnut 108 derart überbrückt, dass eine Fluidverbindung von dem Trägergas-Anschluss 102 zu der Mantelstrahldüse 12 freigegeben ist (in Figur 4 durch die mit dem Bezugszeichen 126 bezeichnete Strichlinie hervorgehoben). In der Kolben-Schließstellung ist eine Strömungsverbindung zwischen der ersten Ringnut 104 und der zweiten Ringnut 108 durch die Mantelfläche 122 des Ventilkolbens 118 gesperrt, sodass eine Fluidverbindung von dem Trägergas-Anschluss 102 zu der Mantelstrahldüse 12 unterbrochen ist (vgl. Figur 5).

Zum Sperren oder Freigeben der Zufuhr von flüssigem CO2 in den Expansionskanal 8 weist die Vorrichtung 2 ein Nadelventil 128 mit einer Ventilnadel 130 auf, welche zwischen einer in Figur 4 dargestellten Nadel-Offenstellung und einer in Figur 5 dargestellten Nadel-Schließstellung verschiebbar ist.

In der Nadel-Offenstellung ist eine Zufuhr von flüssigem CO2 in den Expansionskanal freigegeben (in Figur 4 durch die mit Bezugszeichen 134 bezeichnete Strichlinie hervorgehoben). In der Nadel-Schließstellung verschließt die Ventilnadel 130 mit ihrer Spitze eine Zuführöffnung 131 zu dem Düsenkörper 16 (vgl. Figur 5). Dann ist eine Zufuhr von flüssigem CO2 in den Expansionskanal 8 gesperrt (vgl. Figur 5, Strichlinie 134).

Die Ventilnadel 130 ist in einer zentralen axialen Bohrung 132 des Ventilkolbens 118 angeordnet und mit dem Ventilkolben 118 bewegungsgekoppelt. Befindet sich der Ventilkolben 118 in der Kolben-Offenstellung, befindet sich die Ventilnadel 130 in der Nadel-Offenstellung (vgl. Figur 4). Befindet sich der Ventilkolben 118 in der Kolben-Schließstellung, befindet sich die Ventilnadel 130 in der Nadel-Schließstellung (vgl. Figur 5).

Der Ventilkolben 118 und die Ventilnadel 130 bilden insofern eine gemeinsame Ventileinheit 136, welche in einem in Figur 4 dargestellten geöffneten Zustand (Ventilnadel 130 in Nadel-Offenstellung und Ventilkolben 118 in Kolben-Offenstellung) sowohl eine Zufuhr des flüssigem CO2 in den Expansionskanal 8 als auch eine Zufuhr des Trägergases zu der Mantelstrahldüse freigibt und welche in einem in Figur 5 dargestellten geschlossenen Zustand (Ventilnadel in Nadel-Schließstellung und Ventilkolben in Kolben-Schließstellung) sowohl eine Zufuhr des flüssigen CO2s in den Expansionskanal 8 als auch eine Zufuhr des Trägergases zu der Mantelstrahldüse 12 sperrt. In dem vorliegenden Beispiel bildet die gemeinsame Ventileinheit 136 also sowohl eine CO2-Ventileinheit als auch eine Trägergas-Ventileinheit.

Zum Verschieben des Ventilkolbens 118 und der Ventilnadel 130 entlang der zentralen Achse 18, also zum Schalten der gemeinsamen Ventileinheit 136, weist die Vorrichtung 2 wenigstens einen Aktor 138 auf, welcher mit dem Ventilkolben 118 und/oder der Ventilnadel 130 zumindest mittelbar zusammenwirkt. Bei dem Aktor 138 kann es sich beispielhaft und bevorzugt um einen pneumatisch oder elektromagnetisch oder piezoelektrisch oder elektromotorisch betreibbaren Aktor handeln.

In dem in den Figuren 3 bis 6 dargestellten Beispiel kann ferner in analoger Weise zu der in Bezug auf Figur 1 beschriebenen Vorrichtung 2 eine Auswahleinrichtung 142 zum Auswählen einer Öffnungsdauer und/oder einer Schließdauer der gemeinsamen Ventileinheit 136 und eine mit der Auswahleinrichtung 140 zumindest mittelbar gekoppelte Steuereinrichtung 142 zum Ansteuern der gemeinsamen Ventileinheit 136, insbesondere zum Ansteuern des Aktors 138, in Abhängigkeit der gewählten Öffnungsdauer und Schließdauer vorgesehen sein.

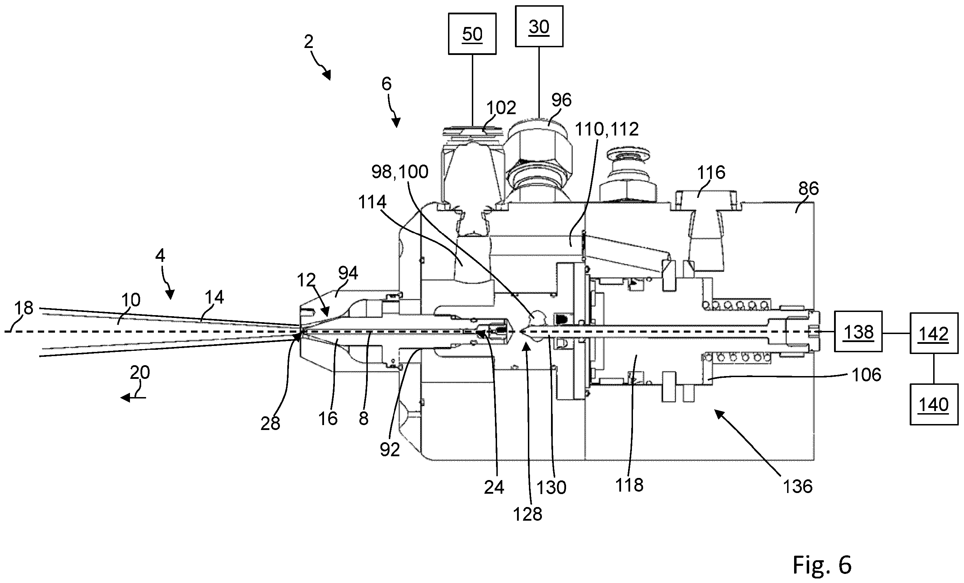

Die Figur 6 zeigt die Vorrichtung 2 gemäß den Figuren 3 bis 5, wobei jedoch der Trägergas-Anschluss 102 und der Dichtstopfen 116, welcher in den Figuren 3 bis 5 die radiale Öffnung 114 der Fluidleitung 112 für das Trägergas verschließt, vertauscht wurden. Bei dem in Figur 6 dargestellten Beispiel wird dann Trägergas, welches über die Trägergas-Zuführeinrichtung 50 zu dem Trägergas-Anschluss 102 zugeführt wird, unabhängig von einer Schaltstellung der gemeinsamen Ventileinheit 136, also unabhängig von einer Stellung des Ventilkolbens 118, der Mantelstrahldüse 12 zugeführt. Es ist also möglich, lediglich durch Versetzen des Trägergas-Anschlusses 102 und des Dichtstopfens 116 entweder Trägergas kontinuierlich der Mantelstrahldüse 12 zuzuführen (Ausgestaltung gemäß Figur 6), oder Trägergas durch Schalten der gemeinsamen Ventileinheit 136 pulsweise der Mantelstrahldüse 12 zuzuführen (Ausgestaltung gemäß Figuren 3 bis 6).

## Patentansprüche

1. Verfahren zum Erzeugen eines CO2-Schnee-Strahls (4),
wobei flüssiges CO2 über eine Eintrittsöffnung (24) in einen Expansionskanal (8) zugeführt wird,
wobei das flüssige CO2 in dem Expansionskanal (8) derart expandiert wird, dass sich das flüssige CO2 zumindest anteilig in ein CO2-Gas/CO2-Schnee Gemisch (10) umwandelt,
wobei das CO2-Gas/CO2-Schnee Gemisch (10)aus einer Austrittsöffnung (28) des Expansionskanals (8) ausgegeben wird,
wobei zur Erzeugung eines Mantelstrahls (14), welcher das aus der Austrittsöffnung (28) des Expansionskanals (8) ausgegebene CO2-Gas/CO2-Schnee Gemisch (10) in einer Umfangsrichtung umgibt und dieses in einer Strahlrichtung (20) beschleunigt, ein Trägergas in eine den Expansionskanal (8), vorzugsweise konzentrisch, umgebende Mantelstrahldüse (12) zugeführt wird,
wobei zum Erzeugen eines pulsierenden CO2-Schnee-Strahls (4) eine die Zufuhr des flüssigen CO2s in den Expansionskanal (8) wahlweise freigebende oder sperrende CO2-Ventileinheit (32) periodisch für eine Öffnungsdauer (34) geöffnet und für eine Schließdauer (36) geschlossen wird, und wobei die Öffnungsdauer (34)
und/oder die Schließdauer (36) separat voneinander ausgewählt werden und die Öffnungsdauer (34) und die Schließdauer (36) dann zur Steuerung der CO2-Ventileinheit (32) verwendet werden **dadurch gekennzeichnet, dass**
eine die Zufuhr des Trägergases in die Mantelstrahldüse (14) wahlweise freigebende oder sperrende Trägergas-Ventileinheit (52) periodisch für eine Öffnungsdauer (54) geöffnet und für eine Schließdauer (56) geschlossen wird, und dass die Öffnungsdauer (54) und/oder die Schließdauer (56) separat voneinander ausgewählt werden und die Öffnungsdauer (54) und die Schließdauer (56) dann zur Steuerung der Trägergas-Ventileinheit (52) verwendet werden und
dass die Öffnungsdauer (34) bzw. die Schließdauer (36) der CO2-Ventileinheit (32) und die Öffnungsdauer (54) bzw. die Schließdauer (56) der Trägergas-Ventileinheit (52) derart ausgewählt werden, dass die Öffnungsdauer (34) bzw. die Schließdauer (36) der CO2-Ventileinheit (32) und die Öffnungsdauer (54) bzw. die Schließdauer (56) der Trägergas-Ventileinheit (52) gleich lang sind und dass das Öffnen bzw. das Schließen der CO2-Ventileinheit (32) und das Öffnen bzw. das Schließen der Trägergas-Ventileinheit (52) durch Öffnen bzw. Schließen einer gemeinsamen Ventileinheit (136) erfolgen.

2. Verfahren nachAnspruch 1, **dadurch gekennzeichnet, dass** die Öffnungsdauer (34) und/oder die Schließdauer (36) der CO2-Ventileinheit (32) und die Öffnungsdauer (54) und/oder die Schließdauer (56) der Trägergas-Ventileinheit (52) wenigstens 0,05 ms, insbesondere wenigstens 0,25 ms, insbesondere wenigstens 0,5 ms, insbesondere wenigstens 1 ms, insbesondere wenigstens 2,5 ms, insbesondere wenigstens 4,5 ms, und höchstens 4 s, insbesondere höchstens 2 s, insbesondere höchstens 1 s, insbesondere höchstens 500 ms, insbesondere höchstens 50 ms, insbesondere höchstens 20 ms, insbesondere höchstens 10 ms, insbesondere höchstens 7,5 ms, insbesondere höchstens 5,5 ms, betragen.

3. Verfahren nach einem der voranstehenden Ansprüche, **dadurch gekennzeichnet, dass** die Öffnungsdauer (34) und/oder die Schließdauer (36) der CO2-Ventileinheit (32) und die Öffnungsdauer (54) und/oder die Schließdauer (56) der Trägergas-Ventileinheit (52) derart ausgewählt werden, dass die Summe der Öffnungsdauer (34) und der darauffolgenden Schließdauer (36) der CO2-Ventileinheit (32) und die Summe der Öffnungsdauer (54) und der darauffolgenden Schließdauer (56) der Trägergas-Ventileinheit (52) wenigstens 1 ms, insbesondere wenigstens 2 ms, insbesondere wenigstens 5 ms, insbesondere wenigstens 8 ms, und höchstens 4 s, insbesondere höchstens 2 s, insbesondere höchstens 1 s, insbesondere höchstens 500 ms, insbesondere höchstens 20 ms, insbesondere höchstens 15 ms, insbesondere höchstens 12 ms, beträgt.

4. Verfahren nach einem der voranstehenden Ansprüche, **dadurch gekennzeichnet, dass** die Öffnungsdauer (34) und/oder die Schließdauer (36) der CO2-Ventileinheit (32) und die Öffnungsdauer (54) und/oder die Schließdauer (56) der Trägergas-Ventileinheit (52) derart ausgewählt werden, dass ein Verhältnis von Öffnungsdauer (34) zu Schließdauer (36) der CO2-Ventileinheit (32) bzw. ein Verhältnis von Öffnungsdauer (54) zu Schließdauer (56) der Trägergas-Ventileinheit (52) wenigstens 0,05, insbesondere wenigstens 0,25, insbesondere wenigstens 0,4, insbesondere wenigstens 0,6, insbesondere wenigstens 0,9, und höchstens 20, insbesondere höchstens 4, insbesondere höchstens 2,5, insbesondere höchstens 1,5, insbesondere höchstens 1,1, insbesondere 1, beträgt.

5. Verfahren nach einem der Ansprüche 1 bis 4, **dadurch gekennzeichnet, dass** ein Öffnungsschaltzeitpunkt (44) und/oder ein Schließschaltzeitpunkt (46) der CO2-Ventileinheit (32) ausgewählt und zur Steuerung der CO2-Ventileinheit (32) verwendet werden und dass ein Öffnungsschaltzeitpunkt (58) und/oder ein Schließschaltzeitpunkt (60) der Trägergas-Ventileinheit (52) ausgewählt werden und zur Steuerung der Trägergas-Ventileinheit (52) verwendet werden und dass der Öffnungsschaltzeitpunkt (44) bzw. der Schließschaltzeitpunkt (46) der CO2-Ventileinheit (32) und der Öffnungsschaltzeitpunkt (58) bzw. der Schließschaltzeitpunkt (60) der Trägergas-Ventileinheit (52) derart ausgewählt werden, dass der Öffnungsschaltzeitpunkt (44) bzw. der Schließschaltzeitpunkt (46) der CO2-Ventileinheit (32) mit dem Öffnungsschaltzeitpunkt (58) bzw. dem Schließschaltzeitpunkt (58) der Trägergas-Ventileinheit (52) übereinstimmt oder derart, dass der Öffnungsschaltzeitpunkt (44) bzw. der Schließschaltzeitpunkt (46) der CO2-Ventileinheit (32) und der Öffnungsschaltzeitpunkt (58) bzw. der Schließschaltzeitpunkt (60) der Trägergas-Ventileinheit (52) zueinander zeitlich versetzt sind.

6. Verfahren nach einem der voranstehenden Ansprüche, **dadurch gekennzeichnet, dass** zum Öffnen bzw. Schließen der gemeinsamen Ventileinheit (136) die gemeinsame Ventileinheit (136) mittels eines elektrischen oder pneumatischen Steuersignals angesteuert wird, insbesondere ein pneumatisch oder elektromagnetisch oder elektromotorisch oder piezoelektrisch oder hydraulisch betriebener Aktor (138) angesteuert wird.

7. Verfahren nach einem der voranstehenden Ansprüche, **dadurch gekennzeichnet, dass** - zum Anpassen einer Reinigungswirkung im Zuge eines Reinigungsprozesses mittels des CO2-Schnee-Strahls - die Öffnungsdauer (34) bzw. die Schließdauer (36) der CO2-Ventileinheit (32) und die Öffnungsdauer (54) bzw. die Schließdauer (56) der Trägergas-Ventileinheit (52) verändert werden.

8. Vorrichtung (2) mit einem Strahlwerkzeug (6) umfassend einen Expansionskanal (8) zum Erzeugen eines CO2-Gas/CO2-Schnee Gemisches (10) ausgehend von flüssigem CO2 und eine den Expansionskanal (8), vorzugsweise konzentrisch, umgebende Mantelstrahldüse (12) zum Erzeugen eines Mantelstrahls (14) aus einem Trägergas, wobei der Expansionskanal (8) eine Eintrittsöffnung (24) zum Zuführen von flüssigem CO2 und eine Austrittsöffnung (28) zum Ausgeben des CO2-Gas/CO2-Schnee Gemisches (10) aufweist und wobei die Mantelstrahldüse (12) derart ausgebildet ist, dass der Mantelstrahl (14) das aus der Austrittsöffnung (28) des Expansionskanals (8) ausgegebene CO2-Gas/CO2-Schnee Gemisch (10) in einer Umfangsrichtung umgibt und in einer Strahlrichtung (20) beschleunigt, umfassend:
- eine CO2-Ventileinheit (32), welche im Betrieb mit einer Zuführeinrichtung (30) für flüssiges CO2 zusammenwirkt und dazu eingerichtet ist, eine Zufuhr von flüssigem CO2 in den Expansionskanal (8) in einem geöffneten Zustand (72) freizugeben und in einem geschlossenen Zustand (74) zu sperren,
- eine CO2-Steuereinrichtung (48) zum Ansteuern der CO2-Ventileinheit (32),
- eine erste Auswahleinrichtung (38) zum Auswählen einer Öffnungsdauer (34) und/oder einer Schließdauer (36) der CO2-Ventileinheit (32),
eine Trägergas-Ventileinheit (52), welche im Betrieb mit einer Trägergas-Zuführeinrichtung (50) zusammenwirkt und dazu eingerichtet ist, eine Zufuhr von Trägergas in die Mantelstrahldüse (12) in einem geöffneten Zustand (78) freizugeben und in einem geschlossenen Zustand (80) zu sperren,
eine Trägergas-Steuereinrichtung (68) zum Ansteuern der Trägergas-Ventileinheit (52),
**dadurch gekennzeichnet, dass** die Vorrichtung zur Durchführung des Verfahrens nach Anspruch 1 geeignet ist, und dass
die Vorrichtung eine zweite Auswahleinrichtung (62) zum Auswählen einer Öffnungsdauer (54) und/oder einer Schließdauer (56) der Trägergas-Ventileinheit (52) umfasst,
und dass die erste und die zweite Auswahleinrichtung (38, 62) durch eine gemeinsame Auswahleinrichtung gebildet sind und
dass die CO2-Ventileinheit (32) und die Trägergas-Ventileinheit (52) durch eine gemeinsame Ventileinheit (136) gebildet sind, welche im Betrieb mit einer CO2-Zuführeinrichtung (30) und einer Trägergas-Zuführeinrichtung (50) zusammenwirkt und dazu eingerichtet ist, die Zufuhr von flüssigem CO2 in den Expansionskanal (8) und die Zufuhr von Trägergas zu der Mantelstrahldüse (12) gleichzeitig in einem geöffneten Zustand freizugeben und in einem geschlossenen Zustand zu sperren, und
dass die gemeinsame Ventileinheit (136) einen Ventilkolben (118) und eine Ventilnadel (130) umfasst, wobei der Ventilkolben (118) in einem Strahlwerkzeuggehäuse (86) zwischen einer die Zufuhr des Trägergases zu der Mantelstrahldüse (12) freigebenden Kolben-Offenstellung und einer die Zufuhr des Trägergases zu der Mantelstrahldüse (12) sperrenden Kolben-Schließstellung verschiebbar gelagert ist, wobei die Ventilnadel (130) zwischen einer die Zufuhr des flüssigen CO2s in den Expansionskanal (8) freigebenden Nadel-Offenstellung und einer die Zufuhr des flüssigen CO2s in den Expansionskanal (8) sperrenden Nadel-Schließstellung verschiebbar gelagert ist, und wobei der Ventilkolben (118) mit der Ventilnadel (130) derart gekoppelt ist, dass die Ventilnadel (130) bei einem Überführen des Ventilkolbens (118) aus der Kolben-Offenstellung in die Kolben-Schließstellung aus der Nadel-Offenstellung in die Nadel-Schließstellung überführt wird bzw. dass der Ventilkolben (118) bei einem Überführen der Ventilnadel (130) aus der Nadel-Offenstellung in die Nadel-Schließstellung aus der Kolben-Offenstellung in die Kolben-Schließstellung überführt wird.

9. Vorrichtung (2) nach Anspruch 8, **dadurch gekennzeichnet, dass** die Vorrichtung (2) einen pneumatisch oder elektromagnetisch oder piezoelektrisch oder elektromotorisch betreibbaren Aktor (138) zum Verschieben des Ventilkolbens (118) und/oder der Ventilnadel (130) aufweist.

## Claims

1. Method for generating a CO2 snow jet (4),
wherein liquid CO2 is fed into an expansion channel (8) via an inlet opening (24),
wherein the liquid CO2 is expanded in the expansion channel (8) such that the liquid CO2 is at least partially converted into a CO2 gas/CO2 snow mixture (10),
wherein the CO2 gas/CO2 snow mixture (10) is discharged from an outlet opening (28) of the expansion channel (8),
wherein, in order to generate a sheath jet (14), which surrounds the CO2 gas/CO2 snow mixture (10) discharged from the outlet opening (28) of the expansion channel (8) in a circumferential direction and accelerates said mixture in a jet direction (20), a carrier gas is fed into a sheath jet nozzle (12) which, preferably concentrically, surrounds the expansion channel (8),
wherein, in order to generate a pulsating CO2 snow jet (4), a CO2 valve unit (32), which selectively unblocks or blocks the supply of the liquid CO2 into the expansion channel (8), is periodically opened for an opening duration (34) and closed for a closing duration (36), and wherein the opening duration (34) and/or the closing duration (36) are selected separately from one another and the opening duration (34) and the closing duration (36) are then used to control the CO2 valve unit (32),
**characterized in that** a carrier gas valve unit (52) which selectively unblocks or blocks the supply of the carrier gas into the sheath jet nozzle (14) is periodically opened for an opening duration (54) and closed for a closing duration (56), and **in that** the opening duration (54) and/or the closing duration (56) are selected separately from one another and the opening duration (54) and the closing duration (56) are then used to control the carrier gas valve unit (52), and
**in that** the opening duration (34) or the closing duration (36) of the CO2 valve unit (32) and the opening duration (54) or the closing duration (56) of the carrier gas valve unit (52) are selected such that the opening duration (34) or the closing duration (36) of the CO2 valve unit (32) is the same length as the opening duration (54) or the closing duration (56) of the carrier gas valve unit (52), respectively, and **in that** the opening or closing of the CO2 valve unit (32) and the opening or closing of the carrier gas valve unit (52) take place by opening or closing a common valve unit (136), respectively.

2. Method according to claim 1, **characterized in that** the opening duration (34) and/or the closing duration (36) of the CO2 valve unit (32) and the opening duration (54) and/or the closing duration (56) of the carrier gas valve unit (52) are at least 0.05 ms, in particular at least 0.25 ms, in particular at least 0.5 ms, in particular at least 1 ms, in particular at least 2.5 ms, in particular at least 4.5 ms, and at most 4 s, in particular at most 2 s, in particular at most 1 s, in particular at most 500 ms, in particular at most 50 ms, in particular at most 20 ms, in particular at most 10 ms, in particular at most 7.5 ms, in particular at most 5.5 ms.

3. Method according to any of the preceding claims, **characterized in that** the opening duration (34) and/or the closing duration (36) of the CO2 valve unit (32) and the opening duration (54) and/or the closing duration (56) of the carrier gas valve unit (52) are selected such that the sum of the opening duration (34) and the subsequent closing duration (36) of the CO2 valve unit (32) and the sum of the opening duration (54) and the subsequent closing duration (56) of the carrier gas valve unit (52) is at least 1 ms, in particular at least 2 ms, in particular at least 5 ms, in particular at least 8 ms, and at most 4 s, in particular at most 2 s, in particular at most 1 s, in particular at most 500 ms, in particular at most 20 ms, in particular at most 15 ms, in particular at most 12 ms.

4. Method according to any of the preceding claims, **characterized in that** the opening duration (34) and/or the closing duration (36) of the CO2 valve unit (32) and the opening duration (54) and/or the closing duration (56) of the carrier gas valve unit (52) are selected such that a ratio of the opening duration (34) to the closing duration (36) of the CO2 valve unit (32) or a ratio of the opening duration (54) to the closing duration (56) of the carrier gas valve unit (52) is at least 0.05, in particular at least 0.25, in particular at least 0.4, in particular at least 0.6, in particular at least 0.9, and at most 20, in particular at most 4, in particular at most 2.5, in particular at most 1.5, in particular at most 1.1, in particular 1.

5. Method according to any of claims 1 to 4, **characterized in that** an opening switching time (44) and/or a closing switching time (46) of the CO2 valve unit (32) is selected and used for controlling the CO2 valve unit (32), and **in that** an opening switching time (58) and/or a closing switching time (60) of the carrier gas valve unit (52) is selected and used for controlling the carrier gas valve unit (52), and **in that** the opening switching time (44) or the closing switching time (46) of the CO2 valve unit (32) and the opening switching time (58) or the closing switching time (60) of the carrier gas valve unit (52) are selected such that the opening switching time (44) or the closing switching time (46) of the CO2 valve unit (32) matches the opening switching time (58) or the closing switching time (58) of the carrier gas valve unit (52), respectively, or such that the opening switching time (44) or the closing switching time (46) of the CO2 valve unit (32) and the opening switching time (58) or the closing switching time (60) of the carrier gas valve unit (52) are respectively temporally offset with respect to one another.

6. Method according to any of the preceding claims, **characterized in that**, in order to open or close the common valve unit (136), the common valve unit (136) is actuated by means of an electrical or pneumatic control signal, in particular a pneumatically or electromagnetically or electromotively or piezoelectrically or hydraulically operated actuator (138) is actuated.

7. Method according to any of the preceding claims, **characterized in that**, in order to adapt a cleaning effect in the course of a cleaning process by means of the CO2 snow jet, the opening duration (34) or the closing duration (36) of the CO2 valve unit (32) and the opening duration (54) or the closing duration (56) of the carrier gas valve unit (52) are changed.

8. Apparatus (2) having a jet tool (6) comprising an expansion channel (8) for generating a CO2 gas/CO2 snow mixture (10) starting from liquid CO2, and a sheath jet nozzle (12) which, preferably concentrically, surrounds the expansion channel (8) for generating a sheath jet (14) from a carrier gas, wherein the expansion channel (8) has an inlet opening (24) for supplying liquid CO2 and an outlet opening (28) for discharging the CO2 gas/CO2 snow mixture (10), and wherein the sheath jet nozzle (12) is designed such that the sheath jet (14) surrounds the CO2 gas/CO2 snow mixture (10) discharged from the outlet opening (28) of the expansion channel (8) in a circumferential direction and accelerates said mixture in a jet direction (20), comprising:
- a CO2 valve unit (32), which, during operation, interacts with a supply device (30) for liquid CO2 and is designed to unblock a supply of liquid CO2 into the expansion channel (8) in an open state (72) and to block said supply in a closed state (74),
- a CO2 control device (48) for controlling the CO2 valve unit (32),
- a first selection device (38) for selecting an opening duration (34) and/or a closing duration (36) of the CO2 valve unit (32),
a carrier gas valve unit (52), which, during operation, interacts with a carrier gas supply device (50) and is designed to unblock a supply of carrier gas into the sheath jet nozzle (12) in an open state (78) and to block said supply in a closed state (80),
a carrier gas control device (68) for controlling the carrier gas valve unit (52),
**characterized in that** the apparatus is suitable for carrying out the method according to claim 1, and **in that** the apparatus comprises a second selection device (62) for selecting an opening duration (54) and/or a closing duration (56) of the carrier gas valve unit (52),
the first and the second selection device (38, 62) are formed by a common selection device,
the CO2 valve unit (32) and the carrier gas valve unit (52) are formed by a common valve unit (136), which, during operation, interacts with a CO2 supply device (30) and a carrier gas supply device (50) and is designed to simultaneously unblock the supply of liquid CO2 into the expansion channel (8) and the supply of carrier gas to the sheath jet nozzle (12) in an open state and block said supplies in a closed state, and
**in that** the common valve unit (136) comprises a valve piston (118) and a valve needle (130), wherein the valve piston (118) is mounted in a jet tool housing (86) so as to be movable between a piston open position, which unblocks the supply of the carrier gas to the sheath jet nozzle (12), and a piston closed position, which blocks the supply of the carrier gas to the sheath jet nozzle (12), wherein the valve needle (130) is mounted so as to be movable between a needle open position, which unblocks the supply of the liquid CO2 into the expansion channel (8), and needle closed position, which blocks the supply of the liquid CO2 into the expansion channel (8), and wherein the valve piston (118) is coupled to the valve needle (130) such that the valve needle (130) is transferred from the needle open position into the needle closed position when the valve piston (118) is transferred from the piston open position into the piston closed position, or such that the valve piston (118) is transferred from the piston open position into the piston closed position when the valve needle (130) is transferred from the needle open position into the needle closed position.

9. Apparatus (2) according to claim 8, **characterized in that** the apparatus (2) has a pneumatically or electromagnetically or piezoelectrically or electromotively operable actuator (138) for moving the valve piston (118) and/or the valve needle (130).

## Revendications

1. Procédé de génération d'un jet de neige de CO2 (4),
dans lequel du CO2 liquide est introduit dans un canal de détente (8) via une ouverture d'entrée (24),
dans lequel le CO2 liquide est détendu dans le canal de détente (8) de telle manière que le CO2 liquide est au moins partiellement converti en un mélange de gaz de CO2/neige de CO2 (10),
dans lequel le mélange de gaz de CO2/neige de CO2 (10) est déchargé d'une ouverture de sortie (28) du canal de détente (8),
dans lequel, pour générer un jet de chemise (14) qui entoure, dans une direction circonférentielle, le mélange de gaz de CO2/neige de CO2 (10) déchargé de l'ouverture de sortie (28) du canal de détente (8) et qui accélère celui-ci dans une direction de jet (20), un gaz porteur est amenée dans une buse à jet de chemise (12) entourant le canal de détente (8), de préférence concentriquement,
dans lequel, pour générer un jet de neige de CO2 pulsé (4), une unité de soupape de CO2 (32) qui libère ou bloque sélectivement l'alimentation en CO2 liquide du canal de détente (8) est périodiquement ouverte pendant une période d'ouverture (34) et fermée pendant une période de fermeture (36), et dans lequel la durée d'ouverture (34) et/ou la durée de fermeture (36) sont sélectionnées séparément l'une de l'autre et la durée d'ouverture (34) et la durée de fermeture (36) sont ensuite utilisées pour commander ladite unité de soupape de CO2 (32),
**caractérisé par le fait qu'**une unité de soupape de gaz porteur (52) qui libère ou bloque sélectivement l'alimentation en gaz porteur de la buse à jet de chemise (14) est périodiquement ouverte pendant une période d'ouverture (54) et fermée pendant une période de fermeture (56), et que la durée d'ouverture (54) et/ou la durée de fermeture (56) sont sélectionnées séparément l'une de l'autre et la durée d'ouverture (54) et la durée de fermeture (56) sont ensuite utilisées pour commander l'unité de soupape de gaz porteur (52) et
que la durée d'ouverture (34) ou bien la durée de fermeture (36) de l'unité de soupape de CO2 (32) et la durée d'ouverture (54) ou bien la durée de fermeture (56) de l'unité de soupape de gaz porteur (52) sont sélectionnées de telle sorte que la durée d'ouverture (34) ou bien la durée de fermeture (36) de l'unité de soupape de CO2 (32) et la durée d'ouverture (54) ou bien la durée de fermeture (56) de l'unité de soupape de gaz porteur (52) sont identiques et que l'ouverture ou bien la fermeture de l'unité de soupape de CO2 (32) et l'ouverture ou bien la fermeture de l'unité de soupape de gaz porteur (52) ont lieu en ouvrant ou bien en fermant une unité de soupape (136) commune.

2. Procédé selon la revendication 1, **caractérisé par le fait que** la durée d'ouverture (34) et/ou la durée de fermeture (36) de l'unité de soupape de CO2 (32) et la durée d'ouverture (54) et/ou la durée de fermeture (56) de l'unité de soupape de gaz porteur (52) sont d'au moins 0,05 ms, en particulier d'au moins 0,25 ms, en particulier d'au moins 0,5 ms, en particulier d'au moins 1 ms, en particulier d'au moins 2,5 ms, en particulier d'au moins 4,5 ms, et de 4 s tout au plus, en particulier de 2 s tout au plus, en particulier de 1 s tout au plus, en particulier de 500 ms tout au plus, en particulier de 50 ms tout au plus, en particulier de 20 ms tout au plus, en particulier de 10 ms tout au plus, en particulier de 7,5 ms tout au plus, en particulier de 5,5 ms tout au plus.

3. Procédé selon l'une quelconque des revendications précédentes, **caractérisé par le fait que** la durée d'ouverture (34) et/ou la durée de fermeture (36) de l'unité de soupape de CO2 (32) et la durée d'ouverture (54) et/ou la durée de fermeture (56) de l'unité de soupape de gaz porteur (52) sont sélectionnées de telle sorte que la somme de la durée d'ouverture (34) et de la durée de fermeture (36) suivante de l'unité de soupape de CO2 (32) et la somme de la durée d'ouverture (54) et de la durée de fermeture (56) suivante de l'unité de soupape de gaz porteur (52) est d'au moins 1 ms, en particulier d'au moins 2 ms, en particulier d'au moins 5 ms, en particulier d'au moins 8 ms, et de 4 s tout au plus, en particulier de 2 s tout au plus, en particulier de 1 s tout au plus, en particulier de 500 ms tout au plus, en particulier de 20 ms tout au plus, en particulier de 15 ms tout au plus, en particulier de 12 ms tout au plus.

4. Procédé selon l'une quelconque des revendications précédentes, **caractérisé par le fait que** la durée d'ouverture (34) et/ou la durée de fermeture (36) de l'unité de soupape de CO2 (32) et la durée d'ouverture (54) et/ou la durée de fermeture (56) de l'unité de soupape de gaz porteur (52) sont sélectionnées de telle sorte qu'un rapport de la durée d'ouverture (34) à la durée de fermeture (36) de l'unité de soupape de CO2 (32) ou bien un rapport de la durée d'ouverture (54) à la durée de fermeture (56) de l'unité de soupape de gaz porteur (52) est d'au moins 0,05, en particulier d'au moins 0,25, en particulier d'au moins 0,4, en particulier d'au moins 0,6, en particulier d'au moins 0,9, et de 20 tout au plus, en particulier de 4 tout au plus en particulier de 2,5 tout au plus, en particulier de 1,5 tout au plus, en particulier de 1,1 tout au plus, en particulier de 1.

5. Procédé selon l'une quelconque des revendications 1 à 4, **caractérisé par le fait qu'**un temps de commutation d'ouverture (44) et/ou un temps de commutation de fermeture (46) de l'unité de soupape de CO2 (32) sont sélectionnés et utilisés pour commander l'unité de soupape de CO2 (32) et qu'un temps de commutation d'ouverture (58) et/ou un temps de commutation de fermeture (60) de l'unité de soupape de gaz porteur (52) sont sélectionnés et utilisés pour commander l'unité de soupape de gaz porteur (52) et que le temps de commutation d'ouverture (44) ou bien le temps de commutation de fermeture (46) de l'unité de soupape de CO2 (32) et le temps de commutation d'ouverture (58) ou bien le temps de commutation de fermeture (60) de l'unité de soupape de gaz porteur (52) sont sélectionnés de telle manière que le temps de commutation d'ouverture (44) ou bien le temps de commutation de fermeture (46) de l'unité de soupape de CO2 (32) correspond au temps de commutation d'ouverture (58) ou bien au temps de commutation de fermeture (58) de l'unité de soupape de gaz porteur (52) ou de telle sorte que le temps de commutation d'ouverture (44) ou bien le temps de commutation de fermeture (46) de l'unité de soupape de CO2 (32) et le temps de commutation d'ouverture (58) ou bien le temps de commutation de fermeture (60) de l'unité de soupape de gaz porteur (52) sont décalés dans le temps les uns par rapport aux autres.

6. Procédé selon l'une quelconque des revendications précédentes, **caractérisé par le fait que**, pour ouvrir ou bien fermer ladite unité de soupape (136) commune, l'unité de soupape (136) commune est commandée au moyen d'un signal de commande électrique ou pneumatique, en particulier un actionneur (138) actionné de façon pneumatique ou électromagnétique ou par moteur électrique ou de façon piézoélectrique ou hydraulique est commandé.

7. Procédé selon l'une quelconque des revendications précédentes, **caractérisé par le fait que** - pour adapter un effet de nettoyage au cours d'un processus de nettoyage au moyen du jet de neige de CO2 - la durée d'ouverture (34) ou bien la durée de fermeture (36) de l'unité de soupape de CO2 (32) et la durée d'ouverture (54) ou bien la durée de fermeture (56) de l'unité de soupape de gaz porteur (52) sont modifiées.

8. Dispositif (2) comprenant un outil à jet (6) comprenant un canal de détente (8) pour générer un mélange de gaz de CO2/neige de CO2 (10) à partir de CO2 liquide ainsi qu'une buse à jet de chemise (12) entourant le canal de détente (8), de préférence concentriquement, et destinée à générer un jet de chemise (14) à partir d'un gaz porteur, dans lequel le canal de détente (8) comprend une ouverture d'entrée (24) pour l'alimentation en CO2 liquide et une ouverture de sortie (28) pour décharger le mélange de gaz de CO2/neige de CO2 (10) et dans lequel la buse à jet de chemise (12) est conçue de telle manière que le jet de chemise (14) entoure, dans une direction circonférentielle, le mélange de gaz de CO2/neige de CO2 (10) déchargé de l'ouverture de sortie (28) du canal de détente (8) et accélère celui-ci dans une direction de jet (20), comprenant:
- une unité de soupape de CO2 (32) qui, en fonctionnement, agit de concert avec un dispositif d'alimentation (30) en CO2 liquide et est configurée pour libérer une alimentation en CO2 liquide du canal de détente (8) dans un état ouvert (72) et pour bloquer celle-ci dans un état fermé (74),
- un dispositif de commande de CO2 (48) pour commander l'unité de soupape de CO2 (32),
- un premier dispositif de sélection (38) pour sélectionner une durée d'ouverture (34) et/ou une durée de fermeture (36) de l'unité de soupape de CO2 (32),
une unité de soupape de gaz porteur (52) qui, en fonctionnement, agit de concert avec un dispositif d'alimentation en gaz porteur (50) et est configurée pour libérer une alimentation en gaz porteur de la buse à jet de chemise (12) dans un état ouvert (78) et pour bloquer celle-ci dans un état fermé (80),
un dispositif de commande de gaz porteur (68) pour commander l'unité de soupape de gaz porteur (52),
**caractérisé par le fait que** le dispositif est adapté pour mettre en œuvre le procédé selon la revendication 1, et que le dispositif comprend un deuxième dispositif de sélection (62) pour sélectionner une durée d'ouverture (54) et/ou une durée de fermeture (56) de l'unité de soupape de gaz porteur (52), et
que le premier et le deuxième dispositif de sélection (38, 62) sont formés par un dispositif de sélection commun, et
que l'unité de soupape de CO2 (32) et l'unité de soupape de gaz porteur (52) sont formées par une unité de soupape commune (136) qui, en fonctionnement, agit de concert avec un dispositif d'alimentation en CO2 (30) et un dispositif d'alimentation en gaz porteur (50) et est configurée pour libérer simultanément l'alimentation en CO2 liquide du canal de détente (8) et l'alimentation en gaz porteur de la buse à jet de chemise (12) dans un état ouvert et pour bloquer celles-ci dans un état fermé, et
que l'unité de soupape commune (136) comprend un piston de soupape (118) et un pointeau de soupape (130), dans lequel le piston de soupape (118) est logé dans un boîtier d'outil à jet (86) de manière à pouvoir être déplacé entre une position ouverte de piston libérant l'alimentation en gaz porteur vers la buse à jet de chemise (12) et une position fermée de piston bloquant l'alimentation en gaz porteur vers la buse à jet de chemise (12), dans lequel le pointeau de soupape (130) est logé de manière à pouvoir être déplacé entre une position ouverte de pointeau libérant l'alimentation en CO2 liquide du canal de détente (8) et une position fermée de pointeau bloquant l'alimentation en CO2 liquide du canal de détente (8), et dans lequel le piston de soupape (118) est couplé au pointeau de soupape (130) de telle sorte que le pointeau de soupape (130), lorsque le piston de soupape (118) passe de la position ouverte de piston à la position fermée de piston, passe de la position ouverte de pointeau à la position fermée de pointeau ou bien que le piston de soupape (118), lorsque le pointeau de soupape (130) passe de la position ouverte de pointeau à la position fermée de pointeau, passe de la position ouverte de piston à la position fermée de piston.

9. Dispositif (2) selon la revendication 8, **caractérisé par le fait que** le dispositif (2) comprend un actionneur (138) apte à être actionné de manière pneumatique ou électromagnétique ou piézoélectrique ou par un moteur électrique et destiné à déplacer le piston de soupape (118) et/ou le pointeau de soupape (130).
